# EUROPÄISCHE PATENTSCHRIFT

(11) **EP 0 470 410 B1**
(45) Veröffentlichungstag und Bekanntmachung des Hinweises auf die Patenterteilung: **28.06.1995**
(21) Anmeldenummer: 91112003.8
(22) Anmeldetag: 18.07.1991
(51) Int. Cl.: B23H 7/26, B23Q 16/00, F16B 5/02

(54) **Halter für Werkstücke aus Metall und anderen Materialien wie Kunststoffe oder Holz**
Holder for workpieces made of metal, plastic or wood
Réceptacle pour pièce, réalisé en métal, plastique ou en bois

(30) Priorität: 07.08.1990 DE 4024971
(43) Veröffentlichungstag der Anmeldung: 12.02.1992
(73) Patentinhaber: ERMET PRÄZISIONS-FORMENBAU GmbH, 91438 Bad Windsheim (DE)
(72) Erfinder: Lischewski, Kurt, W-8801 Gallmersgarten (DE); Brantsch, Karl-Heinz, W-8813 Schillingsfürst (DE); Hartmann, Uwe, W-8531 Ergersheim (DE); Hahn, Oskar, W-8531 Sugenheim (DE)
(74) Vertreter: Merten, Fritz

(56) Entgegenhaltungen:
- EP-A- 0 266 570
- EP-A- 0 308 908
- CH-A- 670 975
- US-A- 3 178 780
- US-A- 3 271 848
- US-A- 4 035 093

## Beschreibung

Die Erfindung betrifft einen Halter für Werkstücke aus Metall und anderen zerspanbaren Materialien wie Kunststoffen oder Holz, wobei die Werkstücke für Arbeitsvorgänge wie Erodieren, Zerspanen, Messen oder dergleichen positionsfest, jedoch lösbar mit dem Halter verbindbar sind, wobei der Halter eine axiale Bohrung, ggf. mit einer Senkung für einen Schraubenkopf aufweist und wobei ferner das Werkstück eine Gewindebohrung aufweist und die lösbare Verbindung zwischen Halter und Werkstück mittels einer Schraube hergestellt wird.

Derartige Halter sind bekannt. Das DE-GM 89 10 889 zeigt beispielsweise Halter für Elektroden, bei denen die Elektroden in eine Bohrung eines Elektrodenschafts aus Stahl mit Preßsitz eingepreßt werden. Dadurch wird ein guter Halt der Elektrode gewährleistet. Nachteilig an diesem Halter ist jedoch, daß es sehr aufwendig ist, die Elektrode und die Bohrung so aufeinander abzustimmen, daß ein einwandfreier Preßsitz gewährleistet ist, daß immer der Teil der Elektrode verloren ist, der eingepreßt wird und daß eine Lösung der Elektrode aus dem Schaft nur unter großen Schwierigkeiten möglich ist, wobei eine exakte Wiederpositionierung ausgeschlossen ist. Das Werkstück kann darüber hinaus nur in einer bestimmten Weise befestigt werden.

Eine einfache Lösbarkeit eines Werkstücks und eine gute Wiederpositionierung wird mittels eines Halters erreicht, wie er durch die EP 0 248 116 A2 offenbart wird. Hier wird das Werkstück mit seinem Schaft in eine Öffnung des Halters eingeführt und mittels einer Spannschraube seitlich festgeklemmt. Handelt es sich um ein Werkstück, das in diesem Halter bearbeitet werden soll, so ist nachteilig, daß, um eine hohe Verdrehsicherheit und exakte Wiederpositionierungsmöglichkeit zu gewährleisten, ein Schaft mit polygonalem Querschnitt, passend in den Halter, an dem Werkstück angeformt sein muß. Im Falle von Kupferelektroden wird zum Beispiel durch das Anfräsen eines passenden Schafts ein zusätzlicher Arbeitsgang nötig und es geht viel Material verloren. Es wird aber auch vorgeschlagen, in den Halter einen zusätzlichen, polygonalen Halter einzusetzen, auf den das zu bearbeitende Werkstück aufgeschraubt oder aufgelötet wird. Im einen Fall ist das Werkstück nur sehr unbefriedigend befestigt und kann nicht exakt Wiederpositioniert werden, wenn es einmal entfernt war, im zweiten Fall ist bereits die Lösung vom Halter praktisch unmöglich.

Bekannt ist aus der DE-AS 11 97 727 weiter ein Stirnmitnehmer für Drehbänke, zwischen dem und einem Gegenlager am Reitstock Werkstücke zur Bearbeitung eingespannt werden. An dem Grundkörper des Stirnmitnehmers ist ein Tragkörper für geringfügig verschwenkbare Mitnehmerbolzen angeordnet, wobei die Mitnehmerbolzen Schneiden aufweisen. Aufgabe ist hier, eine einfachere Handhabung, kürzere Spannzeiten und die selbsttätige Einstellung einer bestimmten Axialkraft für die Übertragung der Drehmomente zu ermöglichen. Eine exakte Wiederpositionierung von Werkstücken, die von dem Stirnmitnehmer und dem Gegenlager gelöst worden sind, ist jedoch nicht möglich.

Aus der DE 36 25 608 A1 ist eine Spannvorrichtung für ein Werkzeug an z.B. einer Senkerodiermaschine bekannt. Diese Spannvorrichtung ist jedoch nicht dafür gedacht, direkt mit der Elektrode verbunden zu werden, sondern mit einem Elektrodenhalter, an dem die Elektrode befestigt wird.

Dieses Spannsystem ist einerseits sehr aufwendig (Prisma und Nut), andererseits darf die Elektrode nicht von dem Elektrodenhalter gelöst werden, um eine exakte Wiederpositionierung zu gewährleisten. In der Praxis werden daher Elektrodenhalter und Elektrode zusammengeschraubt belassen, bis die Elektrode aufgebraucht ist. Dies führt zu einem erhöhten Materialbedarf.

Aus der EP 0 111 092 schließlich ist eine Vorrichtung bekannt, bei der das Werkstück mit einem zusätzlichen Teil, einer Mitnehmerscheibe, positioniert wird, wobei für die exakte Wiederpositionierung die Mitnehmerscheibe nicht von dem Werkstück gelöst werden darf und somit auch hier ein hoher Bedarf an zusätzlichen Teilen vorliegt. Darüber hinaus ist diese Vorrichtung relativ aufwendig.

Aufgabe der vorliegenden Erfindung ist es daher, einen Halter für Werkstücke zu schaffen, mit dem ohne großen Aufwand und ohne zusätzliche Zwischenstücke das Werkstück gelöst und exakt wiederpositioniert werden kann, bei dem am Werkstück keine aufwendigen Befestigungsarbeiten anfallen und bei dem das Werkstück leicht in verschiedenen Positionen am Halter befestigt werden kann. Darüberhinaus soll ein fester Halt gewährleistet sein, bei dem auch Arbeitsgänge wie Zerspanen möglich sind, ohne daß das Werkstück verschoben wird.

Gemäß der Erfindung wird diese Aufgabe dadurch gelöst, daß das Material des Halters härter ist, als das Material des Werkstücks, daß der Halter mindestens eine einer Fläche des Werkstücks gegenüberliegende Anlagefläche aufweist, daß in einem Abstand neben der mindestens einen Anlagefläche und diese überragend mindestens eine, auf das Werkstück gerichtete, Andruckkante, oder mindestens einen, auf das Werkstück gerichteten Andruckpunkt angeordnet ist, und daß zwischen der mindestens einen Anlagefläche und/oder der mindestens einen Andruckkante, bzw. dem mindestens einem Andruckpunkt Freisparungen angeordnet sind.

Der Abstand zwischen Anlagefläche und Andruckkante, bzw. Andruckpunkt beträgt zwischen 0,1 und 3 mm, die Freisparungen bezogen auf die Anlageflächen sind mindestens 0,1 mm tief, damit durch den Andruck verdrängtes Material nicht zu Ungenauigkeiten führen kann.

Vorteilhafte Ausführungen und Weiterbildungen der Erfindung sind in den Unteransprüchen umfasst.

Der erfindungsgemäße Halter wird als z.B. Vierkant aus einem Material hergestellt, das härter sein muß, als das zu bearbeitende Werkstück. Für viele Anwendungen ist gehärteter Einsatzstahl ausreichend.

Auf der, dem Werkstück gegenüberliegenden unteren Fläche des Vierkants sind Anlageflächen und Andruckkanten, bzw. Andruckpunkte und, zwischen diesen, Freisparungen angeordnet. Die Andruckkanten können z.B. die Oberkanten von an dem Halter angefrästen Prismen sein. Axial verläuft durch den Halter eine Bohrung, vorteilhafterweise mit Senkung für eine Schraube. Andruckpunkte können auf an dem Halter angeformten Kegeln, Pyramiden, oder Kugeln liegen.

Um das Werkstück fest auf den Halter zu spannen, wird der Halter mit seiner unteren Fläche mit einer, dem Material entsprechenden, Kraft auf das Werkstück gedrückt. Das angeformte Prisma drückt sich dann so tief in das Werkstück ein, bis die Anlageflächen auf dem Werkstück anliegen. Eine glatte Anlage wird dadurch erreicht, daß das durch das Eindrücken auf dem Werkstück verdrängte Material in den Freisparungen des Halters aufgefangen wird.

Durch diesen Vorgang erhält das Werkstück einen Abdruck der unteren Fläche des Halters, wodurch der Halter jederzeit wieder exakt, mit einer Sicherheit von bis zu 0,01 mm, auf dem Werkstück positioniert werden kann. Um den Halter mit dem Werkstück zu verbinden, wird eine Gewindebohrung in das Werkstück eingebracht und Halter und Werkstück miteinander verschraubt.

Als besonders vorteilhaft hat es sich erwiesen, die Andruckkanten oder Andruckpunkte kreuzförmig um die Bohrung des Halters und damit beim Abdruck auf dem Werkstück um die Gewindebohrung anzuordnen. Diese Verbindung, wobei die Andruckkanten, bzw. Andruckpunkte zusammen mit der Verschraubung auch gegenüber starken seitlich einwirkenden Kräften - wie zum Beispiel durch Schruppen beim Fräsen - standhalten, ergibt einen festen Halt bei den verschiedensten Bearbeitungen, wobei das Werkstück seitlich nicht verrückt wird und eine exakte Plangenauigkeit bewahrt.

Eine weitere vorteilhafte Ausführung liegt darin, daß mehrere Reihen von Andruckkanten, bzw, Andruckpunkten vorgesehen sind, da dadurch bei größeren Werkstücken die Exaktheit der Wiederpositionierung weiter erhöht werden kann.

Halter und Werkstück können nun beliebig oft voneinander gelöst werden, die exakte Wiederpositionierung ist jederzeit möglich. Als vorteilhaft hat sich erwiesen, die Lage des Halters zum Werkstück dadurch zu kennzeichnen, daß z. B. eine Andruckkante kürzer ist oder ein Andruckpunkt versetzt angeordnet ist. Dadurch kann die einmal fixierte Position jederzeit leicht wieder hergestellt werden. Werkstücke, die bereits seit längerem nicht in Gebrauch oder Bearbeitung waren, können mittels des Halters sofort wieder richtig positioniert werden.

Durch diese flexible und einfache Handhabung ist es auch möglich, das Werkstück in verschiedenen Stellungen zu fixieren, um unterschiedliche Bearbeitungen vorzunehmen. Dazu müssen Abdrücke und Gewindebohrungen lediglich an den gewünschten Stellen des Werkstücks angebracht werden.

Halter, wie Werkstück können im Grunde jede beliebige Form aufweisen. Dies erlaubt, z.B. bei Elektroden als Werkstücken, eine außerordentliche und preisgünstige Formvielfalt. Der Halter wird vorteilhafterweise so ausgelegt, daß er in die üblichen Aufnahmen und Spannsysteme von Werkzeugmaschinen usw. passt.

Die Größe der Halter, die Größe und Zahl ihrer Andruckkanten, bzw. Andruckpunkte, sowie der Andruckflächen variiert mit dem Material und der Größe der verwendeten Werkstücke, sowie der Art der Bearbeitung. Grundsätzlich sind diesen Parametern keine besonderen Grenzen gesetzt, außer denen, daß die Werkstücke auf den verwendeten Werkzeugmaschinen noch bearbeitet werden können.

Im Folgenden wird die Erfindung anhand von Zeichnungen näher beschrieben. Dabei zeigen
- Fig. 1): einen erfindungsgemäßen Halter mit Werkstück;
- Fig. 2): den Halter gemäß Fig. 1;
- Fig. 3): eine Draufsicht auf die untere Fläche eines Halters gemäß Fig. 1 und 2;
- Fig. 4): einen Abdruck auf einem Werkstück;
- Fig. 5): weitere Ausführungen erfindungsgemäßer Halter.

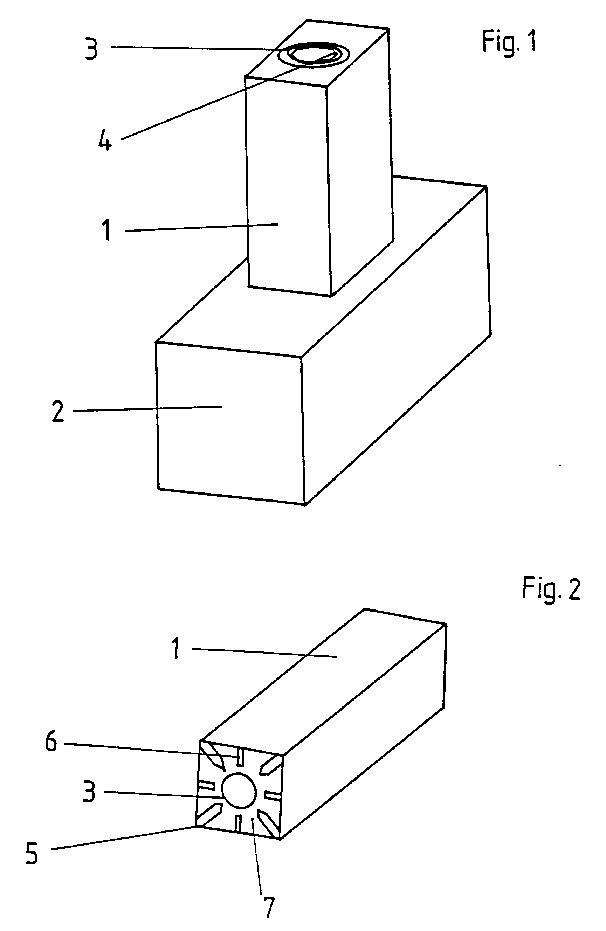

Fig. 1 zeigt einen Halter 1, der mit einem Werkstück 2 fest verschraubt ist. Der Halter 1 ist ein Vierkant mit einer zentralen Bohrung mit Senkung 3 für eine Schraube 4. Im Werkstück 2 befindet sich eine zu der Schraube 4 passende Gewindebohrung.

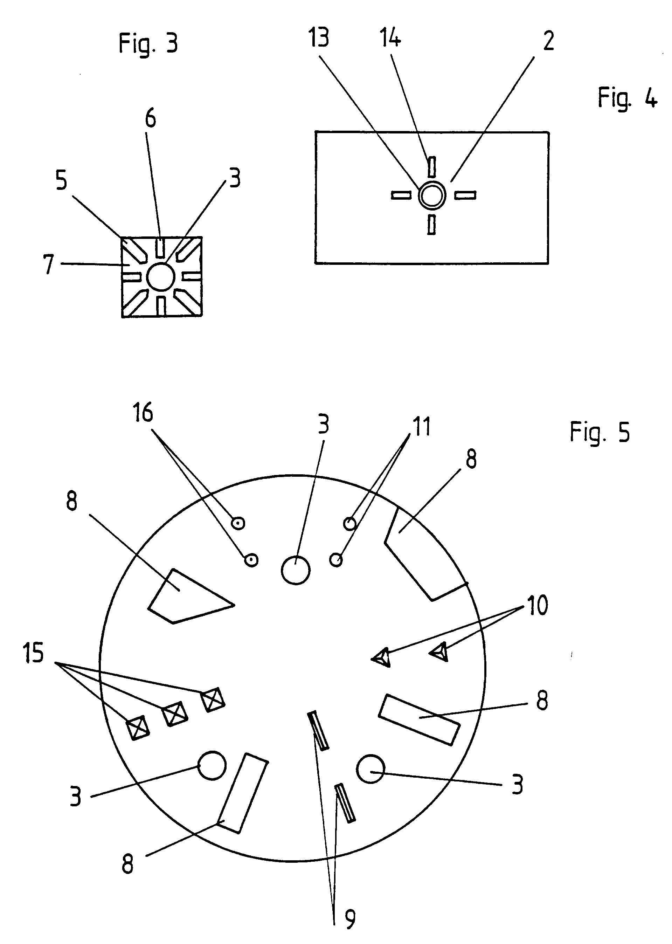

Der Halter 1 ist an seiner unteren Fläche, wie in Fig. 2 und Fig. 3 dargestellt, mit Anlageflächen 5, Andruckkanten auf Andruckprismen 6 und Freisparungen 7 zwischen Anlageflächen 5 versehen. Die kreuzförmig angeordneten Andruckprismen überragen die Anlageflächen um zwischen 0,1 und 3 mm. Die Freisparungen sind, bezogen auf die Anlageflächen, mindestens 0,1 mm tief und nehmen das auf dem Werkstück durch den Andruck verdrängte Material auf.

Der Abdruck des Halters 1 auf dem Werkstück 2 ist in Fig. 4 gezeigt. Um die Gewindebohrung 13 sind kreuzförmig die Eindrücke 14 angeordnet.

Fig. 5 zeigt verschiedene Möglichkeiten der Gestaltung eines erfindungsgemäßen Halters. So können die Anlageflächen 8 verschiedene Formen haben. Die Andruckkanten auf Andruckprismen 9 können in mehreren Reihen angeordnet sein. Neben Andruckkanten, bzw. statt Andruckkanten, können auch Andruckpunkte auf Pyramiden 10, 15, Kegeln 16 oder Kugeln 11 vorgesehen sein. Desgleichen kann der Haltern, je nach Größe, auch mit mehreren Bohrungen 3 für mehrere Schrauben versehen sein. Entsprechend unterschiedlich fallen dann die Freisparungen 7 aus.

Der erfindungsgemäße Halter ist demgemäß für jeden gewünschten Zweck variabel herstellbar.

## Patentansprüche

1. Halter (1) für Werkstücke (2) aus Metall und anderen zerspanbaren Materialien wie Kunststoffen oder Holz,
wobei die Werkstücke (2) für Arbeitsvorgänge wie Erodieren, Zerspanen, Messen oder dergleichen positionsfest, jedoch lösbar mit dem Halter (1) verbindbar sind,
wobei der Halter (1) eine axiale Bohrung (3), ggf. mit einer Senkung für einen Schraubenkopf aufweist,
wobei ferner das Werkstück (2) eine Gewindebohrung aufweist und die lösbare Verbindung zwischen Halter (1) und Werkstück (2) mittels einer Schraube hergestellt wird,
**dadurch gekennzeichnet**,
daß der Halter (1) mindestens eine Anlagefläche (5) für das Werkstück aufweist,
daß in einem Abstand neben der mindestens einen Anlagefläche (5) und diese überragend mindestens eine, Andruckkante, oder mindestens ein Andruckpunkt angeordnet ist,
daß zwischen der mindestens einen Anlagefläche (5) und/oder der mindestens einen Andruckkante bzw. dem mindestens einem Andruckpunkt Freisparungen (7) angeordnet sind,
daß der Abstand zwischen Anlagefläche (5) und Andruckkante bzw. Andruckpunkt zwischen 0,1 und 3 mm beträgt,
und daß die Freisparungen (7) bezogen auf die Anlageflächen (5) mindestens 0,1 mm tief sind.

2. Halter nach Anspruch 1,
**dadurch gekennzeichnet**,
daß die mindestens eine Andruckkante, bzw. der mindestens eine Andruckpunkt in einem Abstand neben der axialen Bohrung (3) angeordnet sind.

3. Halter nach Anspruch 1,
**dadurch gekennzeichnet**,
daß mindestens vier Andruckkanten bzw. Andruckpunkte kreuzförmig um die axiale Bohrung (3) angeordnet sind.

4. Halter nach Anspruch 1,
**dadurch gekennzeichnet**,
daß mindestens eine Andruckkante, bzw. ein Andruckpunkt von den anderen unterscheidbar geformt oder angeordnet ist

5. Halter nach Anspruch 1,
**dadurch gekennzeichnet**,
daß die Andruckkanten die Oberkanten von an dem Halter angeformten Prismen (6) sind.

6. Halter nach Anspruch 1,
**dadurch gekennzeichnet**,
daß die Andruckpunkte auf an dem Halter angeformten Kegeln (16), Pyramiden (10)15), oder Kugeln (11) liegen.

## Claims

1. A holder (1) for work pieces (2) made of metal and other machinable materials such as plastics or wood,
in which the work pieces (2) for work processes such as spark eroding, machine shaping, measuring or the like can be connected to the holder (1) in such a way as to be held firmly in position yet capable of being detached from said holder,
in which the holder (1) has an axial drilled hole (3) together with, in certain cases, a countersunk recess for the head of a screw,
in which, in addition, the work piece (2) has a threaded hole and the detachable connection between the holder (1) and the work piece (2) is formed by means of a screw,
characterised in that
the holder (1) has at least one contact surface (5) for the work piece,
in that, located at a set distance from the at least one contact surface (5) and projecting above this, there is at least one thrust edge, or at least one thrust point, in that, located between the at least one contact surface (5) and/or the at least one thrust edge or the at least one thrust point, there are open spaces (7),
in that the clearance distance between contact surface (5) and thrust edge or thrust point is between 0.1 and 3 mm, and in that the open spaces (7) in relation to the contact surfaces (5) are at least 0.1 mm deep.

2. A holder according to claim 1,
characterised in that
the at least one thrust edge or the at least one thrust point are located at a set distance from the axial drilled hole (3).

3. A holder according to claim 1,
characterised in that
at least four thrust edges or thrust points are arranged in a cross-shape around the axial drilled hole (3).

4. A holder according to claim 1,
characterised in that
at least one thrust edge or one thrust point is shaped or arranged to be distinguishable from the others.

5. A holder according to claim 1,
characterised in that
the thrust edges are the upper edges of prisms (6) moulded on to the holder.

6. A holder according to claim 1,
characterised in that
the thrust points lie on cones (16), pyramids (10), (15), or balls (11) moulded onto the holder.

## Revendications

1. Réceptacle (1) pour pièces (2) en métal et en d'autres matériaux pouvant être usinés par enlèvement de copeaux, comme les plastiques ou le bois, où les pièces (2) sont fixes en position pour des opérations telles qu'une érosion, un enlèvement de copeaux, un mesurage ou analogues, mais peuvent être assemblées d'une manière démontable au réceptacle (1), le réceptacle (1) présentant un trou axial (3), éventuellement avec un renfoncement pour une tête de vis, la pièce (2) comportant en outre un trou fileté, et l'assemblage démontable entre le réceptacle (1) et la pièce (2) étant réalisé à l'aide d'une vis, caractérisé en ce que le réceptacle (1) comporte au moins une surface d'appui (5) pour la pièce ; que, à une certaine distance à côté de ladite au moins une surface d'appui (5), et dépassant de cette dernière, on a au moins une arête de pression, ou au moins un point de pression ; que, entre ladite au moins une surface d'appui (5) et/ou ladite au moins une arête de pression ou ledit au moins un point de pression sont disposés des évidements (7) ; que la distance entre la surface d'appui (5) et l'arête de pression ou le point de pression est de 0,1 à 3 mm ; et que les évidements (7) ont, par rapport aux surfaces d'appui (5), une profondeur d'au moins 0,1 mm.

2. Réceptacle selon la revendication 1, caractérisé en ce que ladite au moins une arête de pression, ou ledit au moins un point de pression, sont disposés à une certaine distance à côté du trou axial (3).

3. Réceptacle selon la revendication 1, caractérisé en ce qu'au moins quatre arêtes de pression ou points de pression sont disposés en croix autour du trou axial (3).

4. Réceptacle selon la revendication 1, caractérisé en ce qu'au moins une arête de pression ou un point de pression est façonné et disposé différemment des autres.

5. Réceptacle selon la revendication 1, caractérisé en ce que les arêtes de pression sont les bords supérieurs de prismes (6) rapportés au réceptacle.

6. Réceptacle selon la revendication 1, caractérisé en ce que les points de pression se trouvent sur des cônes (16), des pyramides (10, 15) ou des sphères (11) rapportés au réceptacle.
